# EUROPEAN PATENT SPECIFICATION

(11) **EP 3 362 271 B1**
(45) Date of publication and mention of the grant of the patent: **01.01.2020**
(21) Application number: 16787676.2
(22) Date of filing: 13.10.2016
(51) Int. Cl.: B29D 30/48

(54) **TIRE BEAD FORMER**
VORRICHTUNG ZUM FORMEN EINES REIFENWULSTES
DISPOSITIF POUR LA FABRICATION D'UN BOURRELETN POUR PNEU

(30) Priority: 14.10.2015 US 201562241227 P
(43) Date of publication of application: 22.08.2018
(73) Proprietor: Bartell Machinery Systems LLC, Rome, NY 13440 (US)
(72) Inventor: JOHNSON, Christopher L., Blossvale, NY 13808 (US); GATLEY, Paul D., Holland Patent, NY 13354 (US)
(74) Representative: Zacco Denmark A/S
(86) International application number: PCT/US2016/056753
(87) International publication number: WO 2017/066391

(56) References cited:
- JP-A- H1 086 241
- US-A- 5 203 938
- US-A1- 2008 066 851
- US-A1- 2015 174 841
- US-B2- 6 623 583

## Description

### CROSS-REFERENCE TO RELATED APPLICATIONS

This application claims priority to U.S. provisional application Serial No. 62/241,227, filed October 14, 2015.

### FIELD

The current embodiments generally relate to tire bead forming equipment.

### BACKGROUND

A vehicle tire generally has two annular bead rings at the innermost diameter, which provides the tire with hoop strength and structural integrity. The beads also provide stiffness at the point where the tire mounts to a rim. Beads are generally manufactured by winding metal wire in a groove on the outer periphery of a chuck or drum, often called a former. A bead may also be formed from a single wire.

Often, a single manufacturing facility may produce several types of beads with varying sizes and shapes. Existing equipment may not be able to form more than one type of bead, and therefore multiple machines, each associated with a specific type of bead, can be required in each of these facilities. Other equipment may be adjustable to accommodate different types of beads, but the adjustment process may be burdensome and require substantial modifications to the machinery. For example, the former, which is generally associated with a particular bead type, must be removed and replaced. The former is generally a heavy piece of equipment and may require a substantial amount of time to remove and replace, thereby increasing costs and production times when adjusting machinery to accommodate a different bead.

Thus, an improved bead forming system with a former configured to be adjustable to accommodate different types of beads is desirable.

Patent document JPH 1086241-A discloses an apparatus for forming a tyre bead having a rotatable base, a radially movable support having a protrusion with a bead engaging surface, and radial positioning control means for said protrusion.

### BRIEF SUMMARY

The present embodiments provide an apparatus for facilitating the forming of a bead. In one embodiment, the apparatus comprises a rotatable base and a first movable support, wherein the first movable support is radially moveable with respect to the base. A first protrusion extends from the first movable support, and the first protrusion has a first bead-engaging surface. A position control device is coupled to the first movable support and configured to control the radial position of the movable support with respect to the base. A first fastening portion is located on the first movable support. The first fastening portion is configured to facilitate the attachment of the first protrusion to the first movable support.

The apparatus may further comprise the first protrusion extending from a face of the movable support. The first protrusion may comprise a first bead-engaging surface, wherein the first bead-engaging surface comprises a first expanded diameter in an expanded state and a first contracted diameter in a contracted state.

The first bead-engaging surface may comprises at least one groove configured to receive a wire bead during the formation of the first bead.

The apparatus may further comprises a second fastening portion located on the first movable support. The second fastening portion may be configured to facilitate the attachment of a second protrusion with a second bead-engaging surface to the first movable support.

The apparatus may comprises an axis of rotation defined by the rotatable base. The first fastening portion may be located a first distance from the axis of rotation, and the second fastening portion may be located a second distance from the axis of rotation. The first distance may be larger than the second distance.

The apparatus may further comprise a third fastening portion located on the first movable support. The third fastening portion may be configured to facilitate the attachment of a third protrusion with a third bead-engaging surface to the first movable support.

The apparatus may further comprising a second movable support, wherein the second movable support is radially movable with respect to the base. The second movable support may comprise a second fastening portion located substantially the same distance from an axis of rotation as the first fastening portion.

### BRIEF DESCRIPTION OF THE DRAWINGS

The invention can be better understood with reference to the following drawings and description. The components in the figures are not necessarily to scale, emphasis instead being placed upon illustrating the principles of the invention. Moreover, in the figures, like referenced numerals designated corresponding parts throughout the different views.
FIG. 1 shows a front view of an adjustable former.
FIG. 2A is a side view of an adjustable former with multiple protrusions with bead-engaging surfaces attached thereto.
FIG. 2B is a front view of an adjustable former with multiple protrusions with bead-engaging surfaces attached thereto.
FIG. 3A is a side view of an adjustable former with multiple protrusions with bead-engaging surfaces attached thereto.
FIG. 3B is a front view of an adjustable former with multiple protrusions with bead-engaging surfaces attached thereto.
FIG. 4 is a perspective view of movable supports of a former having multiple protrusions with bead-engaging surfaces attached thereto.

### DETAILED DESCRIPTION OF THE DRAWINGS AND THE PRESENTLY PREFERRED EMBODIMENTS

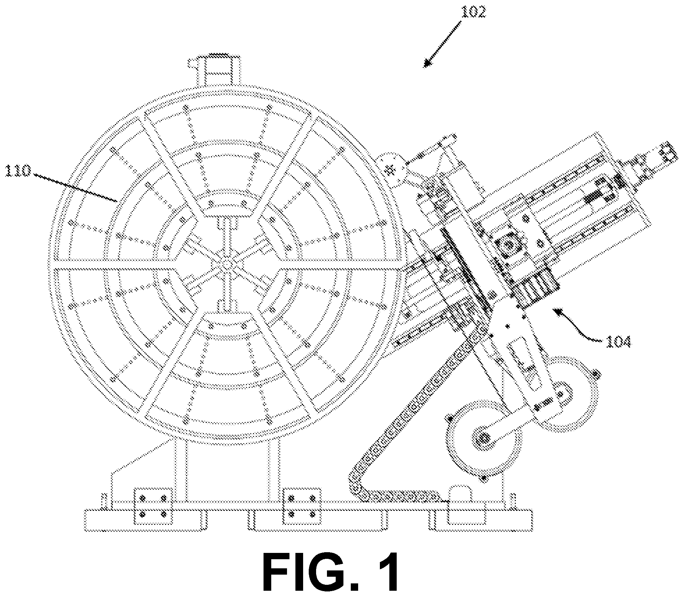

One embodiment of a tire bead former is depicted by FIG 1. Referring to FIG. 1, a bead forming system 102 comprises a former 110, which operates to facilitate the supporting (e.g., gripping, holding, securing) and rotating a bead (not shown) during the formation of the bead. Bead forming equipment 104 generally comprises equipment and technology for the formation of an annular bead ring, and may incorporate components from commercially available products such as the SWS-6000 Single Wire Bead Winding System or the TDS-860 Bead Winder System, each of which are manufactured by Bartell Machinery Systems, L.L.C. of Rome, New York. Other suitable equipment for forming a tire bead may be used. The bead forming equipment 104 may form either a single-wire bead or a multi-wire (e.g., weftless) bead on the former 110.

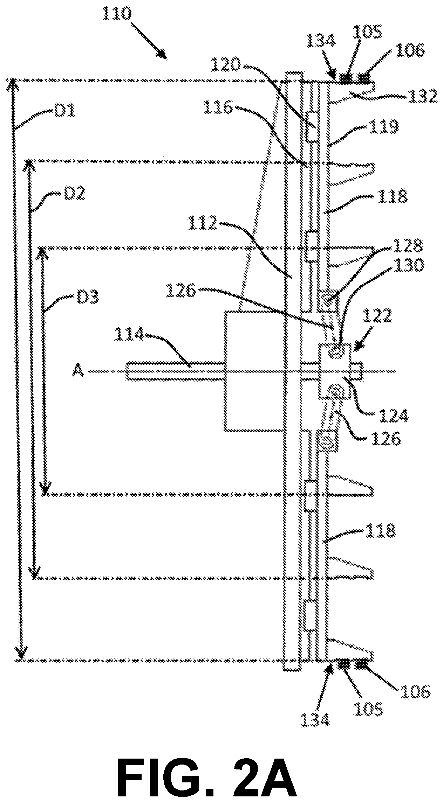

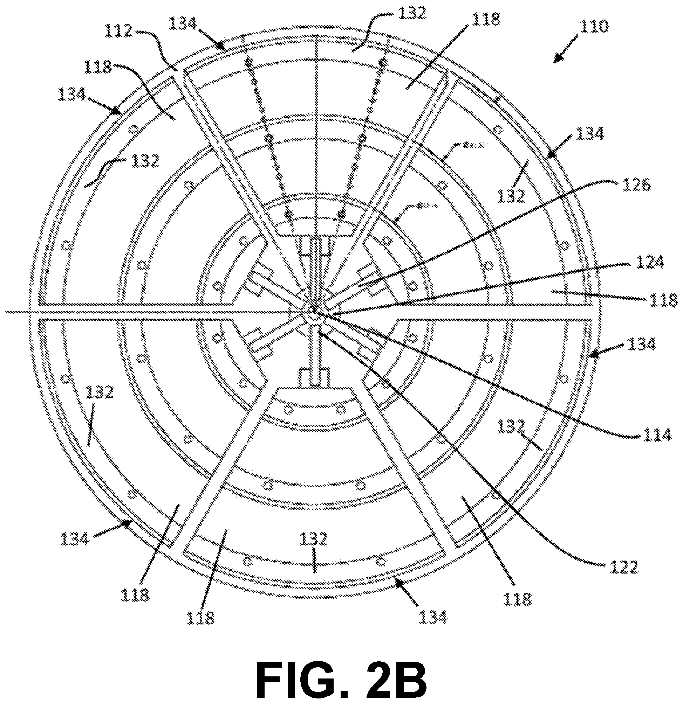

One embodiment of a former is depicted by FIGS. 2A-2B. Referring to FIGS. 2A-2B, former 110 comprises a rotatable base 112 coupled to a spindle 114. The rotatable base 112 is generally rotatable about an axis, here depicted as the axis A. The spindle 114, which is shown as rotatable shaft, may be controlled by bead forming equipment 104 (see FIG. 1) or synchronized with bead forming equipment 104 such that it controls the speed of rotation of the base 112 to correspond properly with the formation of a tire bead (depicted in FIG. 2A and beads 105 and 106).

In the depicted embodiment, the base 112 is coupled to a plurality of movable supports 118. For illustration purposes, each movable support 118 may be referred singularly with associated components, and as if each of the movable supports 118 is identical. However, in some embodiments, each of the plurality of movable supports may be different.

Each movable support 118 may have a face 119 (see FIG. 2A) on its front side. The movable support 118 may be connected to a track 116 such that it is slidable radially inward and outward with respect to the base 112. The movable support 118 may comprise a slide element 120 configured to communicate with the track 116 to facilitate radial movement (e.g. radial sliding) along the track 116.

The movement and position of the movable support 118 may be effected and controlled by any suitable position control device. In one embodiment, the position control device may be an expansion system 122 shown in FIGS. 2A-2B. Here, the expansion system 122 comprises a center component 124 and a plurality of arms 126, wherein each arm 126 corresponds to a movable support 118.

The arms 126 of the expansion system 122 may comprise a generally constant total length between two joints 128 and 130 (see FIG. 2A). Joint 128 may facilitate a connection between the arm 126 and the movable support 118, and the joint 130 maybe facilitate a connection between the arm 126 and the center component 124. The center component 124 may be movable both forward and backward and linearly (or approximately linearly) along the axis A. Because, in the current embodiment, the movement of the movable support 118 (and therefore joint 128) is limited to movement along a plane perpendicular to the axis A, the axial movement of joint 130 will effect a radial movement of the joint 128 with respect to axis A. As a result, the axial movement of the center component 124 will effect expansion and contraction of the plurality of movable supports 118.

Still referring to FIGS. 2A-2B, in one embodiment, the center component 124 may be fixed to the spindle 114. In this embodiment, expansion and contraction of the plurality of movable supports 128 may be achieved by axial movement of the spindle 114. In other embodiments, the central portion 124 may be moveable independent of the spindle 114. The central portion 124 may be movable to select between an expanded state and a retracted state (and intermediate states) of the former 110, which correspond with the above-described expansion and retraction of the movable supports 118, respectively.

The former 110 may comprise a plurality of first protrusions 132 extending from the faces 119 (see FIG. 2A) of the plurality of movable supports 118. The first protrusions 132 may be removable. The first protrusions 132 may include first bead-engaging surfaces 134 facing radially outward. The plurality of first protrusions 132 preferably circumnavigates the axis A, thereby forming a seat for the inner diameter of the bead. A diameter D1 may be defined by the diameter of the circular path formed by plurality of first bead-engaging surfaces 134.

As described above, the depicted embodiment of the former 110 in FIG. 2A-2B comprises the expanded state and the retracted state. Because, in the current embodiment, the protrusions 132 are selectively fixed to the movable supports 118, the first diameter D1 of the first bead-engaging surfaces 134 of the first protrusions 132 may expand and contract with the movable supports 118. Accordingly, the diameter D1 may not be constant, but may change in size as the position of the first surfaces changes due to control by the expansion system 122. Thus, the first bead-engaging surfaces 134 define a first expanded diameter in the expanded state and a first contracted diameter in the contracted state, wherein the first contracted diameter is smaller than the first expanded diameter.

Advantageously, this embodiment facilitates the removal of a formed bead, such as one or both of beads 105 and 106, from the former 110. To illustrate, a bead 106 may be formed on the former 110, and specifically on the bead-engaging surfaces 134, when the former 110 is in an expanded state. After formation of the bead 106 is complete, the bead 106 may be tightly wound around the bead-engaging surfaces 134, applying a constriction force on the former 110. In this situation, it may be unduly difficult to remove the bead 106 from the former 110 due to, for example, friction between bead-engaging surfaces 134 and an inner diameter of the bead 106. Attempting to remove the bead 106 may not only be difficult to achieve, but also may result in damaging the bead 106. The ability of the former 110 to enter a contracted state after formation of the bead 106 alleviates these issues by reducing or eliminating friction between the bead-engaging surface 134 and the bead 106. For the same reasons, the contracted state may facilitate the removal of the bead 106.

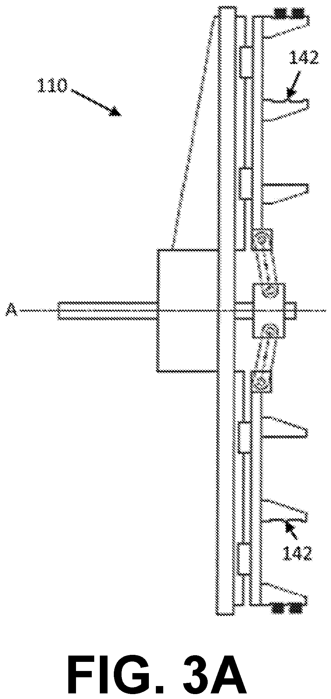

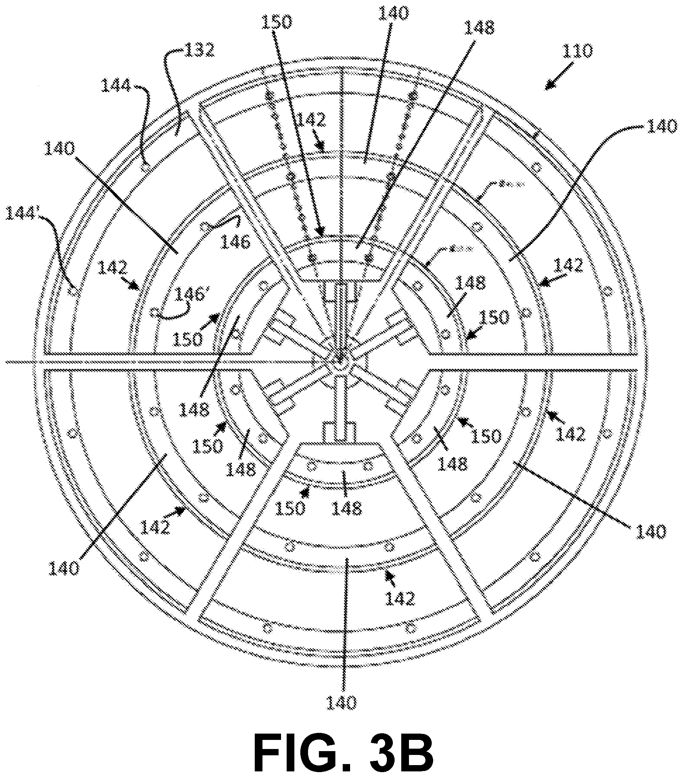

In some embodiments, including the embodiment depicted in FIGS. 3A-3B, the former 110 may comprise plurality of second protrusions 140 extending from the faces 119 of the plurality of movable supports 118. The second protrusions 140 may be removable. The second protrusions 140 may include second bead-engaging surfaces 142 facing radially outward. The plurality of second protrusions 140 preferably circumnavigates the axis A, thereby forming creating a seat for the inner diameter of the bead. A diameter D2 (see FIG. 2A-2B) may be defined by the diameter of the plurality of second bead-engaging surfaces 142. As described above with respect to the plurality of first protrusions 132 (see FIGS. 2A-2B), the diameter (see D2, FIG. 2A) defined by the second bead-engaging surfaces 142 may be selectively adjustable. Thus, the second bead-engaging surfaces 142 may define a second expanded diameter and a second contracted diameter, wherein the second expanded diameter is greater than the second contracted diameter. Advantageously, this may facilitate the removal of a second bead (e.g., a second bead with a diameter smaller than the bead described above with respect to the first bead-engaging surfaces 134) after the formation of the second bead.

Referring to FIGS. 3A-3B, the former 110 may further comprise a plurality of fastening portions configured to interact with a fastener (or act as a fastener themselves) for attaching, for example, the first protrusions 132 to the movable supports 118. To illustrate, a fastening portion 144 and a fastening portion 144' are included in the depicted embodiment, which may be configured to communicate with fasteners (not shown), such as a bolts, screws, cotter pins, etc. to attach and secure the first protrusion 132 to the movable support 118. The fastener may be adjustable and/or removable, which can thereby render the first protrusions 132 as removable.

Advantageously, an embodiment including removable first protrusions 132 may allow the former 110 to quickly be adjusted to form beads of different diameters. To illustrate, the former 110 may, at an initial time, include first protrusions 132 and therefore may be configured to form first beads with a diameter corresponding to the first expanded diameter, as explained above. After a sufficient number of first beads are formed, it may be desired to form second beads with a smaller diameter. The first protrusions 132 may then be removed. While removal of the first protrusions 132 is not required in all embodiments to form a second bead on the second bead-engaging surfaces 142, it may be in desirable to provide removable first protrusions 132 in embodiments where the bead forming equipment 104 (see FIG. 1) is not capable of adjusting the plane of formation of a bead, thus allowing unrestricted access to the second bead-engaging surfaces 142.

Similarly, as shown in FIGS. 3A-3B, second fastening portions 146 and 146' may be provided along with fasteners such that the second protrusions 140 are removable. This may provide access to a plurality of third protrusions 148, which, as described above with respect to the first and second protrusions, may be configured with a plurality of third bead-engaging surfaces 150 which may provide a seat for the formation of a third bead with a diameter smaller than the above-described second bead. The former 110 is not limited to just one, two, or three pluralities of protrusions with bead-engaging surfaces, but may be configured with any number of protrusions. All (or only some) of the protrusions may be removable to facilitate forming a bead on different protrusions and/or to make room for the attachment of other protrusions.

The embodiments described herein are advantageous, as they describe a former 110 that is adjustable to facilitate formation of beads with many different-sized diameters. The adjustment may be accomplished without removing and/or adjusting many significant components, such as the base 112 and movable supports 118. The design may cover any number of beads with any sized diameter, but typical embodiments may cover bead diameter ranges from less than 20 inches to as large (or greater than) 60 inches. Bead forming systems utilizing the embodiments described herein may be significantly lighter and provide an ergonomic and quick changeover between different types/sizes of beads.

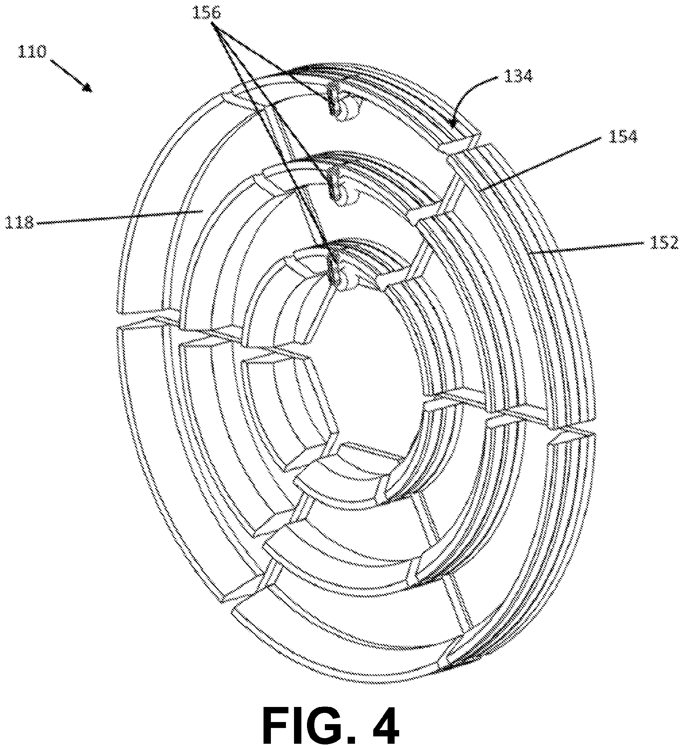

Referring to FIG. 4, an exemplary former 110 may additionally comprise, for example, at least one groove configured to receive at least the inner portion of a bead. As depicted in the figure, the former 110 comprises first groove 152 and second groove 154 within the first bead-engaging surface 134. The grooves 152 and 154, in some embodiments, may be identical, and therefore may be configured to receive and to seat and/or secure identically-dimensioned beads, thereby allowing two identically-dimensioned beads to be formed at once. In other embodiments, first groove 152 may have a depth and/or profile that differs from the depth and/or profile of the second groove 154. This may allow the first bead-engaging surface 134 to facilitate the formation of different bead types with similar inner diameters. The grooves 152 and 154 may be in operation simultaneously or in isolation. Further, it should be understood that, while two grooves in the first bead-engaging surface 134 are described for illustrative purposes, other embodiments may include any number of grooves in the first bead-engaging surface 134. Similarly, grooves (any number) may be included in other bead-engaging surfaces, such as the second bead-engaging surface 142 or the third bead-engaging surface 150, as shown. Any number of grooves (with similar or differing sizes, shapes, and profiles) may be included in these bead-engaging surfaces or any other bead-engaging surface.

Further, still referring to FIG. 4, each protrusion (or each plurality of protrusions defining a diameter) may be associated with one or more grippers 156. In some embodiments, each groove may correspond to its own gripper 156. The grippers 156 may be configured to grab and grip the leading edge of a wire or multiple wires during their introduction to the former 110 (e.g., to the beginning of formation of a bead on the former 110). The grippers 156 may continue to grip throughout the formation of the bead, or may release the wire(s) after, for example, one or two (or any other number) of rotations of the former 110. The grippers 156 may act from above (or radially outside) of the grooves 152 and 154 and provide a downward force on a wire(s) to retain the wire(s) within the grooves. Alternatively, or in addition, the grippers 156 may act and provide grip from below the grooves 152 and 154. This may be achieved by creating a hole or cavity within the grooves 152 and 154 and extending radially inward such that a portion of the grippers 156 located underneath the grooves 152 and 154 can communicate with, and grip, the wire(s). In one embodiment, the grippers 156 may be a gripper as described in U.S. Patent No. 5,882,458 A.

## Claims

1. An apparatus (102) for facilitating the forming of a tyre bead (105, 106), the apparatus comprising:
a rotatable base (112);
an axis of rotation (A) defined by the rotatable base (112);
a first movable support (118), wherein the first movable support is radially moveable with respect to the base (112);
a first protrusion (132) extending from the first movable support (118) at a first location of the movable support, the first protrusion (132) having a first bead-engaging surface (134) with a first groove (152) facing radially away from the axis of rotation (A) to receive at least one wire during the formation of the bead (105, 106);
a second protrusion (140) extending from the first movable support (118) at a second location of the movable support, the second protrusion (140) having a second bead-engaging surface (142) radially aligned with the first bead-engaging surface (134), wherein the first location is located closer to the axis of rotation (A) than the second location, and wherein the second bead-engaging surface (142) includes a second groove facing radially away from the axis of rotation to receive at least one wire during the formation of the bead (105, 106);
a position control device (116, 120, 122) coupled to the first movable support (118) and configured to control the radial position of the first movable support with respect to the base (112); and
a first fastening portion (144, 144') located on the first movable support (118), wherein the first fastening portion is configured to facilitate the attachment of the first protrusion (132) to the first movable support.

2. The apparatus (102) of claim 1, further comprising the first protrusion (132) extending from a face (119) of the first movable support (118), wherein the first protrusion comprises the first bead-engaging surface (134), and wherein the first bead-engaging surface comprises a first expanded diameter (D1) in an expanded state and a first contracted diameter (D1) in a contracted state.

3. The apparatus (102) of claim 1, wherein the apparatus further comprises a second fastening portion (146, 146') located on the first movable support (118), wherein the second fastening portion is configured to facilitate the attachment of the second protrusion (140) to the first movable support.

4. The apparatus (102) of claim 1, wherein the apparatus further comprises a third fastening portion located on the first movable support (118), wherein the third fastening portion is configured to facilitate the attachment of a third protrusion (148) with a third bead-engaging surface (150) to the first movable support.

5. The apparatus (102) of claim 1, the apparatus further comprising a second movable support (118), wherein the second movable support is radially movable with respect to the base (112), and wherein the second movable support comprises a second fastening portion located substantially the same distance from the axis of rotation (A) as the first fastening portion (144, 144').

## Patentansprüche

1. Vorrichtung (102) zum Erleichtern des Formens eines Reifenwulstes (105, 106), wobei die Vorrichtung Folgendes umfasst:
ein drehbares Basisteil (112);
eine durch das drehbare Basisteil (112) definierte Drehachse (A);
eine erste bewegliche Unterstützung (118), wobei die erste bewegliche Unterstützung bezüglich des Basisteils (112) radial beweglich ist;
einen ersten Vorsprung (132), der sich von der ersten beweglichen Unterstützung (118) an einer ersten Position der beweglichen Unterstützung erstreckt, wobei der erste Vorsprung (132) eine erste Wulst-eingreifende Oberfläche (134) mit einer ersten Nut (152) aufweist, die der Drehachse (A) radial abgewandt ist, um mindestens einen Draht während des Formens des Wulstes (105, 106) aufzunehmen;
einen zweiten Vorsprung (140), der sich von der ersten beweglichen Unterstützung (118) an einer zweiten Position der beweglichen Unterstützung erstreckt, wobei der zweite Vorsprung (140) eine zweite Wulst-eingreifende Oberfläche (142) aufweist, die mit der ersten Wulst-eingreifenden Oberfläche (134) radial ausgerichtet ist,
wobei die erste Position näher zur Drehachse (A) als die zweite Position angeordnet ist, und wobei die zweite wulst-eingreifende Oberfläche (142) eine zweite Nut umfasst, die von der Drehachse radial abgewandt ist, um mindestens einen Draht während des Formens des Wulstes (105, 106) aufzunehmen;
eine Positionssteueranordnung (116, 120, 122), die mit der ersten beweglichen Unterstützung (118) verbunden ist und zum Steuern der radialen Position der ersten beweglichen Unterstützung bezüglich des Basisteils (112) ausgelegt ist; und
einen ersten Befestigungsabschnitt (144, 144'), der an der ersten beweglichen Unterstützung (118) angeordnet ist, wobei der erste Befestigungsabschnitt zum Erleichtern der Befestigung des ersten Vorsprungs (132) an der ersten beweglichen Unterstützung zu ausgelegt ist.

2. Vorrichtung (102) nach Anspruch 1, ferner umfassend den ersten Vorsprung (132), der sich von einer Seite (119) der ersten beweglichen Unterstützung (118) erstreckt, wobei der erste Vorsprung die erste Wulst-eingreifende Oberfläche (134) umfasst, und wobei die erste Wulst-eingreifende Oberfläche einen ersten vergrößerten Durchmesser (D1) in einem vergrößerten Zustand und einen ersten verkleinerten Durchmesser (D1) in einem verkleinerten Zustand umfasst.

3. Vorrichtung (102) nach Anspruch 1, wobei die Vorrichtung ferner einen zweiten Befestigungsabschnitt (146, 146') umfasst, der an der ersten beweglichen Unterstützung (118) angeordnet ist, wobei der erste Befestigungsabschnitt zum Erleichtern der Befestigung des zweiten Vorsprungs (140) an der ersten beweglichen Unterstützung ausgelegt ist.

4. Vorrichtung (102) nach Anspruch 1, wobei die Vorrichtung ferner einen dritten Befestigungsabschnitt umfasst, der an der ersten beweglichen Unterstützung (118) angeordnet ist, wobei der dritte Befestigungsabschnitt zum Erleichtern der Befestigung eines dritten Vorsprungs (148) mit einer dritten wulst-eingreifenden Oberfläche (150) an der ersten beweglichen Unterstützung ausgelegt ist.

5. Vorrichtung (102) nach Anspruch 1, wobei die Vorrichtung ferner eine zweite bewegliche Unterstützung (118) umfasst, wobei die zweite bewegliche Unterstützung bezüglich des Basisteils (112) radial beweglich ist, und wobei die zweite bewegliche Unterstützung einen zweiten Befestigungsabschnitt umfasst, der im Wesentlichen in demselben Abstand von der Drehachse (A) wie der erste Befestigungsabschnitt (144, 144') angeordnet ist.

## Revendications

1. Dispositif (102) pour faciliter la formation d'un bourrelet pour pneu (105, 106), le dispositif comprenant :
une base rotative (112) ;
un axe de rotation (A) défini par la base rotative (112) ;
un premier support mobile (118), le premier support mobile étant radialement mobile par rapport à la base (112) ;
une première saillie (132) s'étendant depuis le premier support mobile (118) au niveau d'un premier emplacement du support mobile, la première saillie (132) ayant une première surface venant en prise avec un bourrelet (134) avec une première rainure (152) étant détournée radialement à l'écart de l'axe de rotation (A) pour recevoir au moins un fil lors de la formation du bourrelet (105, 106) ;
une deuxième saillie (140) s'étendant depuis le premier support mobile (118) au niveau d'un deuxième emplacement du support mobile, la deuxième saillie (140) ayant une deuxième surface venant en prise avec un bourrelet (142) étant alignée radialement avec la première surface venant en prise avec un bourrelet (134), le premier emplacement étant situé plus près de l'axe de rotation (A) que le deuxième emplacement, et la deuxième surface venant en prise avec un bourrelet (142) comprenant une deuxième rainure étant détournée radialement à l'écart de de l'axe de rotation pour recevoir au moins un fil lors de la formation du bourrelet (105, 106) ;
un dispositif de commande de position (116, 120, 122) couplé au premier support mobile (118) et configuré pour commander la position radiale du support mobile par rapport à la base (112) ; et
une première partie de fixation (144, 144') située sur le premier support mobile (118), la première partie de fixation étant configurée pour faciliter la fixation de la première saillie (132) au premier support mobile.

2. Dispositif (102) selon la revendication 1, comprenant en outre la première saillie (132) s'étendant à partir d'une face (119) du premier support mobile (118), dans lequel la première saillie comprend une première surface venant en prise avec un bourrelet (134), et dans lequel la première surface venant en prise avec un bourrelet comprend un premier diamètre dilaté (D1) dans un état dilaté et un premier diamètre (D1) contracté dans un état contracté.

3. Dispositif (102) selon la revendication 1, dans lequel le dispositif en outre comprend une deuxième partie de fixation (146, 146') située sur le premier support mobile (118), la deuxième partie de fixation étant configurée pour faciliter la fixation de la deuxième saillie (140) au premier support mobile.

4. Dispositif (102) selon la revendication 1, dans lequel le dispositif en outre comprend une troisième partie de fixation située sur le premier support mobile (118), la troisième partie de fixation étant configurée pour faciliter la fixation de la troisième saillie (148) avec une troisième surface venant en prise avec un bourrelet (150) au premier support mobile.

5. Dispositif (102) selon la revendication 1, le dispositif comprenant en outre un deuxième support mobile (118), dans lequel le deuxième support mobile est radialement mobile par rapport à la base (112), et dans lequel le deuxième support mobile comprend une deuxième partie de fixation située essentiellement à la même distance de l'axe de rotation (A) que la première partie de fixation (144, 144').
